# EUROPÄISCHE PATENTANMELDUNG

(11) **EP 1 292 084 A2**
(43) Veröffentlichungstag der Anmeldung: **12.03.2003**
(21) Anmeldenummer: 02102262.9
(22) Anmeldetag: 02.09.2002
(51) Int. Cl.: H04L 29/06, H04L 12/66

(54) **Verfahren zur Übertragung von Daten in einem paketorientierten Datennetz**

(30) Priorität: 07.09.2001 DE 10144010
(71) Anmelder: SIEMENS AKTIENGESELLSCHAFT, 80333 München (DE)
(72) Erfinder: Klaghofer, Karl, 81373, München (DE); Müller, Harald, 82205, Gilching (DE); Müller, Heribert, 3730, Eggenburg (AT); Totzke, Jürgen, 85586, Poing (DE)

(57) **Zusammenfassung**

Verfahren zur Übertragung von Daten zwischen mindestens zwei Kommunikationseinrichtungen (1,5), die über ein Datennetz miteinander verbunden sind, wobei die Kommunikationseinrichtungen jeweils an einer Kodierungseinrichtung angeschlossen sind und die gesendeten Daten mittels eines jeweils innerhalb der Kodierungseinrichtungen eingerichteten Kodierungsverfahrens quellen- und kanalkodiert werden, wobei die Daten innerhalb einer mit dem Datennetz verbundenen Konvertierungseinrichtung (3) konvertiert werden.

## Beschreibung

Die Erfindung betrifft ein Verfahren zur paketorientierten Übertragung von Daten zwischen mindestens zwei Kommunikationseinrichtungen, gemäß dem Oberbegriff des Patentanspruchs 1 sowie eine Steuereinrichtung und eine Konvertierungseinrichtung.

Kommunikationsverbindungen zur Übertragung von Sprache werden bisher überwiegend verbindungsorientiert aufgebaut. Hierzu ist für eine Signalübertragung zwischen zwei Kommunikationsendpunkten ausschließlich eine physikalische Verbindung vorgesehen, die für die gesamte Zeit der Verbindung reserviert ist. Dies wird auch als leitungsorientierte Übertragung, statisches Routing (Circuit-Switching) oder Durchschaltvermittlung bezeichnet.

Mit dem Aufkommen paketorientierter Datennetze (Packet-Switching), wie beispielsweise dem Internet, wird im Festnetzbereich eine im Vergleich zur verbindungsorientierten Telekommunikation kostenreduzierte Kommunikation angeboten. Dies liegt insbesondere an der effizienten Kapazitätsauslastung einer Verbindung, da im Gegensatz zum Circuit-Switching das Packet-Switching nicht für die gesamte Dauer der Verbindung das physikalische Übertragungsmedium belegt. Die zu transportierenden Daten werden in einzelne Datenpakete aufgeteilt, wobei jedes Datenpaket einen Adreßcode erhält, der den Empfänger der Übertragung kennzeichnet. Die einzelnen Datenpakete werden dann unabhängig voneinander übertragen - dabei können sie sogar verschiedene Übertragungswege nutzen. Das Prinzip des Packet-Switching ist in verschiedenen Standards definiert, der bekannteste Standard ist in der ITU-T Empfehlung x.25 beschrieben.

Als paketorientierte Übertragungsverfahren für Sprache sind beispielsweise VoFR (Voice over Frame Relay) oder VoIP (Voice over IP) bekannt. Hierbei werden Sprachdaten digitalisiert, einer Quellenkodierung und vorzugsweise einer Kanalkodierung unterzogen und auf Datenpakete aufgeteilt, die dann über das Internet übermittelt werden. Insbesondere VoIP wird eine wesentliche Bedeutung für die zukünftige Sprachkommunikation vorausgesagt. Hierbei wird die Sprache digitalisiert und per Hard- oder Software komprimiert (quellenkodiert), wobei die komprimierte Sprache dann den Nutzdatenbereich der IP-Pakete darstellt. Gewählte Rufnummern werden in IP-Adressen umgesetzt, die als Zielinformation in den IP-Header gelangen. Über mehrere, im Datennetz verteilte Netzknoten werden nun die IP-Pakete bis zur Gegenstelle der Sprachverbindung transportiert. Die Gegenstelle speichert die eingehenden Pakete und setzt sie wieder in der richtigen Reihenfolge zusammen. Wird ein Paket beschädigt oder geht es verloren, so wird es nicht erneut gesendet. An der Gegenstelle wird den Paketen die Sprachinformation entnommen, die dann einer Kodierungseinrichtung zugeführt wird in der die Information dann invers quellen- und kanalkodiert wird und anschließend über geeignete Hardware hörbar gemacht wird.

Da sich ein verzögertes Eintreffen benachbarter IP-Sprach-Pakete (Delay) negativ auf die Qualität der Sprachverbindung auswirkt, sind im IP-Netz verschiedene Verfahren zur Zeitsynchronisierung, und somit zur Minimierung der Verzögerung, vorgesehen um einen QoS (Quality of Service) einzuhalten. Zu diesem Verfahren zählt die Einbindung eines Real-Time-Protocol (RTP) bei dem jedes IP-Paket u. a. zusätzlich einen Zeitstempel (Time Stamp) mit der Entstehungszeit sowie eine Folgenummer (Sequence Information) erhält. Dies erlaubt der Empfängereinrichtung, Pakete nicht nur in richtiger Reihenfolge, sondern auch zeitsynchron zusammenzusetzen. Außerdem definiert RTP die Kodierung von Audiosignalen nach G.723, G.711 oder G.729. Hierbei handelt es sich um Enkodierungsund Dekodierungsverfahren (Codecs), die von der ITU zur analogen und digitalen Verschlüsselung von Sprache in Telefonnetzen definiert wurden.
G.711 entspricht in etwa dem ISDN-Standard, bei dem Sprachdaten mit einem Datenstrom von 64 kBit/s übertragen werden. Durch zusätzlichen Quellenkodierung läßt sich die Datenrate auf bis zu 9,6 kBit/s (dies entspricht dem GSM-Standard) reduzieren, wodurch erst eine Übertragung über VoIP-Netze ermöglicht wird.

Zu diesen Verfahren zählt das weit verbreitete CELP-Verfahren (Codebook Excited linear Predictive Coding), das mit einem komplizierten mathematischen Modell der menschlichen Sprache arbeitet. Am Ausgang dieser Quellenkodierung steht ein Datenstrom mit einer Datenrate von 16 kBit/s, wobei die Sprachqualität nahezu ISDN-Sprachqualität entspricht. Kombiniert mit einem im G.723-Standard definierten Dual-Rate-Speachcoding, genügt sogar ein Datenstrom mit einer Datenrate von nur 5,3 kBit/s bei einer reduzierten aber subjektiv akzeptierten Sprachqualität. Neben einer geringeren Netzbelastung bringt dies den weiteren Vorteil, daß mehrere IP-Pakete gepuffert werden, ohne die Echtzeitbedingung zu gefährden. Die Qualität der Sprachübertragung im IP-Datennetz steigt also mit sinkender Datenrate für einen Sprachkanal.

Voice over IP umfaßt ebenfalls Protokolle zur Übertragung unterschiedlicher Multimediaformate, die über reine Sprachdaten hinausgehen. Insbesondere fallen unter diese Erweiterung die Möglichkeit zur Übertragung von Videokonferenzen.
Zu den bekanntesten Codecs zur Quellenkodierung von Videosignalen zählt der MPEG-1-Standard. Hierbei wird die Auflösung des zu kodierenden Bildes auf ein Source Input Format (SIF) beschränkt, bei dem die Chrominanz in beiden Richtungen unterabgetastet wird und die Anzahl der Bildpunkte halbiert wird. Mittels Bewegungsschätzung und Redundanzreduktion werden die Bewegtbilddaten derart reduziert, daß eine Übertragung über das IP-Netz ermöglicht wird.
Einen weit verbreiteten Standard zur Quellenkodierung von Bewegtbildmaterial stellt der im Jahr 1990 von der CCITT verabschiedete H.261-Standard dar. Entwickelt wurde dieser Kompressionsstandard für Videokonferenz und andere Videodienste im ISDN bei Bitraten von vielfachen von 64 kBit/s. Später wurde der verbesserte und erweiterte Standard H.263 entwickelt, der für Bitraten kleiner 64 kBit/s spezifiziert wurde.

Für jede Datenkategorie (Audio oder Video) gibt es somit eine Vielzahl eigener Codecs. Zur Kommunikation müssen selbstverständlich alle potentiellen Kommunikationspartner den jeweiligen Codec, mit dem eine Nachricht kodiert wurde beherrschen, um eine anschließende Dekodierung ausführen zu können. Wird beispielsweise eine Sprachnachricht mit dem Audiocodec G.729 enkodiert und an eine Empfangseinrichtung übermittelt, die diesen Codec nicht dekodieren kann, so wird der Verbindungsaufbau abgebrochen.

Mit zunehmender Verbreitung von unterschiedlichen VoIP-Netzen und Anwendungsszenarien kommen immer häufiger auch spezielle Geräte zum Einsatz, welche nur spezielle Kodierverfahren beherrschen. In solchen Netzkonfigurationen müßte also für eine Vielzahl von Standardendgeräten eine wachsende Anzahl von Kodierverfahren implementiert werden, was höhere Rechenleistung und höhere Lizenzkosten bedingt.

Der Erfindung liegt daher die Aufgabe zugrunde, ein Verfahren der gattungsgemäßen Art dahingehend weiterzubilden, daß auch bei unterschiedlich eingerichteten Kodierungs- und Dekodierungsverfahren, eine Verbindung aufgebaut wird. Desweiteren ist es Aufgabe der Erfindung, eine Steuereinrichtung und eine Konvertierungseinrichtung zur Durchführung des Verfahrens zur Verfügung zu stellen.

Diese Aufgabe wird durch ein Verfahren mit den Merkmalen von Patentanspruch 1 sowie durch eine Steuereinrichtung nach Patentanspruch 9 bzw. durch eine Konvertierungseinrichtung nach Patentanspruch 10 gelöst. Bevorzugte Ausgestaltungen der Erfindung ergeben sich aus den abhängigen Ansprüchen.

Unter "Multimediadaten" werden im Kontext der Erfindung Sprachdaten und/oder Bild- bzw. Bewegtbild- und Videodaten verstanden.

Ein wesentlicher Gedanke der Erfindung liegt darin, daß die zu übertragenden Multimediadaten bei zueinander inkompatiblen Kodierungs- und Dekodierungsverfahren von einer Sende- und Empfangseinrichtung der ersten Kommunikationseinrichtung an eine im Datennetz vorgesehenene Konvertierungseinrichtung übertragen, innerhalb der Konvertierungseinrichtung konvertiert, und die konvertierten Multimediadaten an die Sendeund Empfangseinrichtung der zweiten Kommunikationseinrichtung übertragen werden.

Ein Vorteil dieses Verfahrens liegt darin begründet, daß ein Verbindungsaufbau auch bei zueinander inkompatiblen Kodierungs- und Dekodierungsverfahren der Endgeräte bewirkt werden kann. Somit werden bedeutend weniger Kodierungsverfahren seitens der Endgeräte integriert, wodurch die geräteinterne Rechenleistung zur Ausführung der Kodierung reduziert werden kann. Außerdem werden Kosten für Lizenzen, der zur Ausführung der Kodierung notwendigen Software oder Hardware, reduziert.

In einer bevorzugten Ausführung wird mittels einer innerhalb einer Steuereinrichtung angeordneten Überwachungseinrichtung ein aufgrund inkompatibler Kodierungs- und Dekodierungsverfahren nicht ausführbarer Verbindungsaufbau gekennzeichnet. Daraufhin wird eine erste Kennzeichnung an eine ebenfalls innerhalb der Steuereinrichtung angeordneten Signalisierungseinrichtung übermittelt. Die Signalisierungseinrichtung übermittelt darauf eine Signalisierung an die zweite Kommunikationseinrichtung, mittels derer eine Abfrage der innerhalb der Dekodierungseinrichtung der zweiten Kommunikationseinrichtung eingerichteten Dekodierungsverfahren eingeleitet wird. Im Anschluß dieser Abfrage wird eine zweite Kennzeichnung, die in Abhängigkeit der innerhalb der Dekodierungseinrichtung eingerichteten Dekodierungsverfahren steht, an die Steuereinrichtung übertragen und anschließend an die Konvertierungseinrichtung übermittelt. Innerhalb der Steuereinrichtung wird das Kodierungsverfahren der ersten Kommunikationseinrichtung gekennzeichnet und eine entsprechende dritte Kennzeichnung an die Konvertierungseinrichtung übermittelt. Anschließend werden die Multimediadaten innerhalb der Konvertierungseinrichtung in Abhängigkeit von der zweiten und dritten Kennzeichnung konvertiert.

In einer weiteren Ausführung wird mittels einer innerhalb der Konvertierungseinrichtung angeordneten Überwachungseinrichtung ein aufgrund inkompatibler Kodierungs- und Dekodierungsverfahren nicht ausführbarer Verbindungsaufbau gekennzeichnet. Daraufhin wird eine erste Kennzeichnung an eine ebenfalls innerhalb der Konvertierungseinrichtung angeordneten Signalisierungseinrichtung übermittelt. Die Signalisierungseinrichtung übermittelt darauf eine Signalisierung an die zweite Kommunikationseinrichtung, mittels der eine Abfrage der innerhalb der Dekodierungseinrichtung der zweiten Kommunikationseinrichtung eingerichteten Dekodierungsverfahren eingeleitet wird. Im Anschluß dieser Abfrage wird durch die zweite Kommunikationseinrichtung eine zweite Kennzeichnung, die in Abhängigkeit der innerhalb der Dekodierungseinrichtung eingerichteten Dekodierungsverfahren steht, an die Konvertierungseinrichtung übertragen. Innerhalb der Konvertierungseinrichtung wird das Kodierungsverfahren der ersten Kommunikationseinrichtung als dritte Kennzeichnung gekennzeichnet. Anschließend werden auch hierbei die Multimediadaten innerhalb der Konvertierungseinrichtung in Abhängigkeit von der zweiten und dritten Kennzeichnung konvertiert.

Vorzugsweise werden die zu konvertierenden Multimediadaten einer innerhalb der Konvertierungseinrichtung angeordneten dritten Dekodierungseinrichtung zugeführt, die entsprechend der zweiten Kennzeichnung eine Dekodierung der kodierten Multimediadaten durchführt. Die dekodierten Multimediadaten werden darauf einer ebenfalls innerhalb der Konvertierungseinheit angeordneten dritten Kodierungseinheit zugeführt, die entsprechend der dritten Kennzeichnung eine Kodierung der Multimediadaten durchführt. Im Anschluß an die Konvertierung werden die kodierten Daten an die Sende- und Empfangseinrichtung der zweiten Kommunikationseinrichtung übertragen.

Zur Konvertierung hält die Konvertierungseinrichtung in einer software-basierten Ausführung innerhalb einer Datenbank eine Mehrzahl von Algorithmen zur Durchführung von Dekodierungsund Kodierungsverfahren gespeichert. Ein mit der Datenbank über eine Schnittstelle verbundener Prozessor führt entsprechend der von der Steuereinheit empfangenen zweiten und dritten Kennzeichnung eine Dekodierung und zugleich Kodierung der Daten durch.

In einer hardware-basierten Ausführung werden die zu konvertierenden Multimediadaten einem innerhalb der Konvertierungseinrichtung angeordneten Halbleiterelement, insbesondere einem Digital Signal Processor (DSP), zugeführt. Die Daten werden dann innerhalb des DSP's in Abhängigkeit der zweiten und der dritten Kennzeichnung konvertiert.

In einer bevorzugten Ausführung ist das Datennetz als Kommunikationssystem nach dem Standard H.323 zur Übertragung von VoIP-Daten aufgebaut und die Steuereinrichtung ist vorzugsweise als H.323-Gatekeeper ausgebildet. In einer weiteren Ausführung ist das Datennetz als Multimedia-Kommunikationssystem nach einem SIP-Standard aufgebaut, wobei die Steuereinrichtung dann vorzugsweise als SIP-Proxy ausgebildet ist. Vorzugsweise wird die Konvertierungseinrichtung durch die Steuereinrichtung mittels des H.248-Protokolls oder des Megaco-Protokolls (MGCP) angesteuert.

Weitere vorteilhafte Ausführungsformen ergeben sich aus den Unteransprüchen sowie der nachfolgenden Beschreibung der bevorzugten Ausführungsbeispiele, die anhand der Abbildungen näher erläutert werden. Hierbei zeigen:
Fig. 1 einen Aufbau eines Kommunikationssystems gemäß Standard H.323,
Fig. 2 einen Aufbau eines H.323-Netzwerkes,
Fig. 3 ein Beispiel eines Netzaufbaus in einer Ausführungsform der Erfindung,
Fig. 4 ein Beispiel eines Signalisierungsablaufs anhand eines Ablaufdiagramms,
Fig. 5 ein Beispiel einer Konvertierungseinrichtung,
Fig. 6 ein Beispiel einer Steuereinrichtung und
Fig. 7 ein Beispiel einer Kommunikationseinrichtung.

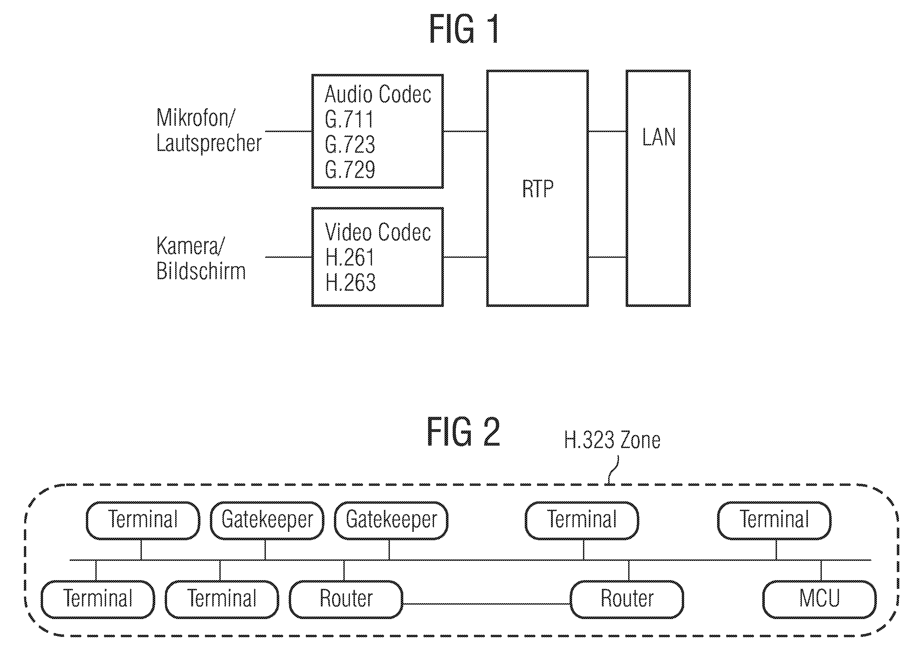

In Figur 1 ist ein Systemaufbau nach Standard H.323 dargestellt. Der H.323-Standard gibt den Standard für Echtzeitkommunikation an und beschreibt den Transport von Multimedia-Daten über IP-basierende Netzwerke, die keinen garantierten "Quality of Service" (QoS) haben. Ein Real-Time-Protokoll (RTP) definiert die Kodierung von Audiosignalen und Videosignalen. Für jede dieser Datenkategorien gibt es eigene Codecs, die ebenfalls genormt sind. Welcher Codec bei einer Kommunikation verwendet wird, hängt von den vorhandenen Ressourcen (Rechnerleistung, Übertragungsbandbreite) und der gewünschten Qualität ab und wird beim Verbindungsaufbau festgelegt.

Zur Übertragung von Audiodaten werden die Codecs G.711, G.723 oder G.729 zur Quellenkodierung eingebunden. Insbesondere dem Standard G.723 kommt zur VoIP-Übertragung eine große Bedeutung zu, da am Ausgang einer Quellenkodierung nach diesem Standard ein Datenstrom mit einer Datenrate von 5,3 kBit/s bei guter Sprachqualität zur Verfügung steht. Zur Übertragung von Bewegtbildmaterial über VoIP-Netze werden die Videodaten mittels des Codecs H.261 oder H.263 komprimiert. Hier kommt insbesondere dem Standard H.263 eine große Bedeutung zu, da dieser Codec die Videodaten auf eine Datenrate kleiner 64 kBit/s komprimiert.

Fig. 2 zeigt den Aufbau eines H.323-Netzwerkes. In einem H.323-Netzwerk gibt es mehrere unterschiedliche Komponenten: Terminals, Gateways, Gatekeeper und Multipoint Control Units (MCU). Terminals stellen in der H.323-Empfehlung die Endpunkte einer bidirektionalen Echtzeitkommunikation dar. H.323 legt die unterschiedlichen Betriebsarten fest, über die Terminals untereinander Informationen austauschen können. Zu Informationen, die zwischen H.323 Terminals ausgetauscht werden, zählen Audio/Videodaten und Steuersignale. Für jede dieser Datenkategorien gibt es eigene Codecs, die ebenfalls genormt sind.

In den Gateways erfolgt der Übergang von einem Übertragungsnetz in ein anderes und die damit verbundene Umsetzung zwischen verschiedenen Übertragungsformaten. Gateways werden hauptsächlich für die Anbindung des öffentlichen Telefonnetzes an das Internet verwendet.

Ein Gatekeeper hat die Aufgabe, beim Verbindungsaufbau die Zugangsberechtigungen der Benutzer zu überprüfen, Adreßumsetzungen durchzuführen und die für Kommunikation verfügbare Bandbreite zu verwalten. Die Gesamtheit aller Terminals, Gateways und Multipoint Control Units, die ein Gatekeeper verwaltet, wird H.323-Zone genannt.

Bei Konferenzschaltungen zwischen drei oder mehr H.323 Terminals bzw. Gateways wird eine Multipoint Control Unit benötigt. Eine MCU besteht aus einem Multipoint Controller (MC) und einer beliebigen Anzahl von Multipoint Processors (MP).

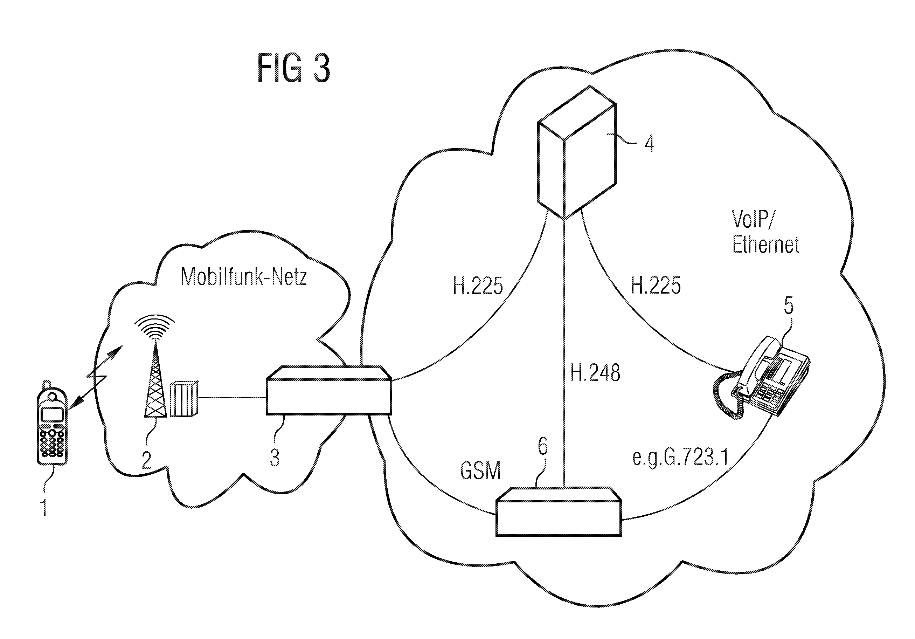

Fig. 3 zeigt ein Beispiel eines Netzaufbaus in einer Ausführungsform der Erfindung. In diesem Beispiel möchte ein mobiler Teilnehmer eines Mobilfunknetzes - hier eines GSM-Netzes - über ein GSM-IP-Gateway eine Verbindung zu einem IP-Netz aufbauen. Der mobile Teilnehmer stellt dazu mit einem Mobilfunkendgerät 1 über eine Luftschnittstelle eine Verbindung zu einer Base Tranceiver Station (BTS) 2 her. Die Verbindung wird aus dem Mobilfunknetz über das GSM-IP-Gateway 3 an das IP-Netz weitergeleitet.

Das IP-Netz ist in dieser Ausführung als H.323/H.248-gesteuertes VoIP-Netz aufgebaut. Das GSM-IP-Gateway 3 setzt die GSM-kodierten Sprachsignale auf IP-Pakete um. Daraus folgt, daß die Sprachsignale auch im VoIP-Netz nach GSM-Kodierverfahren kodiert sind. Dem Ausführungsbeispiel liegt weiterhin die Annahme zugrunde, daß alle Rufe aller Teilnehmer über eine Steuerungseinrichtung 4, beispielsweise einem H.323-Gatekeeper, signalisiert werden. Ein mit dem VoIP-Netz verbundenes Endgerät 5 hat lediglich das Kodierverfahren G.723 integriert. Bezogen auf den Stand der Technik können also zwischen dem Mobilfunkendgerät 1 und dem Endgerät 5 keine Sprachkanäle aufgebaut werden.

Gemäß einer Ausführungsform der Erfindung ist innerhalb des VoIP-Netzes eine Konvertierungseinrichtung 6 integriert. Diese Einrichtung enthält eine Überwachungseinrichtung, die ein Auftreten eines aufgrund inkompatibler Codecs abgewiesenen Verbindungsaufbau erkennt. Daraufhin werden Signalisierungen zur Abfrage der von dem Mobilfunkendgerät 1 und dem Endgerät 5 verwendeten Codecs ausgelöst. Die Konvertierungseinrichtung 6 hält eine Vielzahl von Codecs gespeichert, mittels derer die kodierten Daten des Mobilfunkendgerätes 1 dekodiert, anschließend entsprechend des Codecs des Endgerätes 5 wieder kodiert werden und anschließend an das Endgerät 5 übertragen werden.

Dieses Verfahren wird selbstverständlich auch umgekehrt ausgeführt, so daß die nach G.723 enkodierten Daten des Endgerätes 5 dekodiert werden und anschließend nach dem GSM-Standard wieder enkodiert werden und an das GSM-IP-Gateway 3 und anschließend an das Mobilfunkendgerät 1 übertragen werden. Als generisches Steuerungsprotokoll zwischen der Konvertierungseinrichtung 6 und dem H.323-Gatekeeper 4 wird der Standard H.248 verwendet.

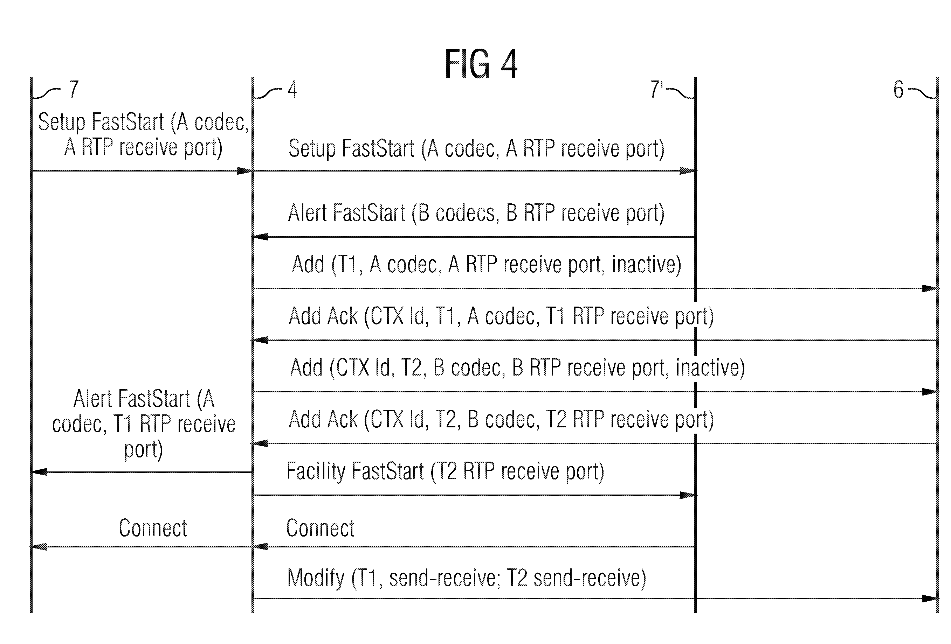

Fig. 4 zeigt ein Beispiel eines Signalisierungsablaufs zwischen zwei Kommunikationseinrichtungen 7, 7' anhand eines Ablaufdiagramms. Ein Teilnehmer A aus dem Mobilfunknetz baut mit dem GSM-IP-Gateway 3 einen Ruf ins VoIP-Netz zu dem Endgerät 5 eines Teilnehmers B auf. Da das GSM-IP-Gateway 3 am Netzübergang nur GSM-kodierte Sprachdaten versenden kann, wird auch nur dieses Format in einer H.225.0 SETUP Nachricht an den H.323-Gatekeeper 4 angegeben. Dieser vermerkt das zur Verfügung stehende Sprachformat und leitet die SETUP Nachricht an Teilnehmer B weiter. Teilnehmer B antwortet mit einer H.225.0 ALERT Nachricht unter Angabe der implementierten Sprachformate, z. B. G.723.

Der Gatekeeper 4 erkennt nun das Fehlen eines gemeinsamen Sprachformates und veranlaßt nun seinerseits den Aufbau der entsprechenden Sprachkanäle in der Konvertierungseinrichtung 6 über H.248-Nachrichten. Nachdem dies erfolgt ist, wird die ALERT Nachricht bezüglich der Empfangsadresse der Sprachdaten von Teilnehmer A modifiziert und zum rufenden Teilnehmer A weitergegeben. Dadurch wird das GSM-IP-Gateway 3 veranlaßt, seine Nutzdaten nicht an das Endgerät 5, sondern an die Konvertierungseinrichtung 6 zu senden. Weiterhin ist zu diesem Zeitpunkt auch bereits bekannt, an welche Portnummer der Konvertierungseinrichtung 6 die Sprachdaten von Teilnehmer B gesendet werden müssen. Dies wird beispielsweise mittels einer H.225-Facility-Nachricht an das Endgerät 5 signalisiert. Dadurch wird das Endgerät 5 veranlaßt seine Nutzdaten nicht an das GSM-IP-Gateway 3 sondern an die Konvertierungseinrichtung 6 zu senden.

Sobald im weiteren Verlauf Teilnehmer B mittels einer H.225 CONNECT Nachricht an den Gatekeeper 4 den Verbindungsaufbau abschließt, wird einerseits diese an das GSM-IP-Gateway 3 weitergegeben. Andererseits schaltet der Gatekeeper 4 die Sprachkanäle in der Konvertierungseinrichtung 6 aktiv, wodurch nun die Sprachdaten bezüglich der Sprachformate in der Konvertierungseinrichtung 6 für diesen Ruf umgesetzt werden.

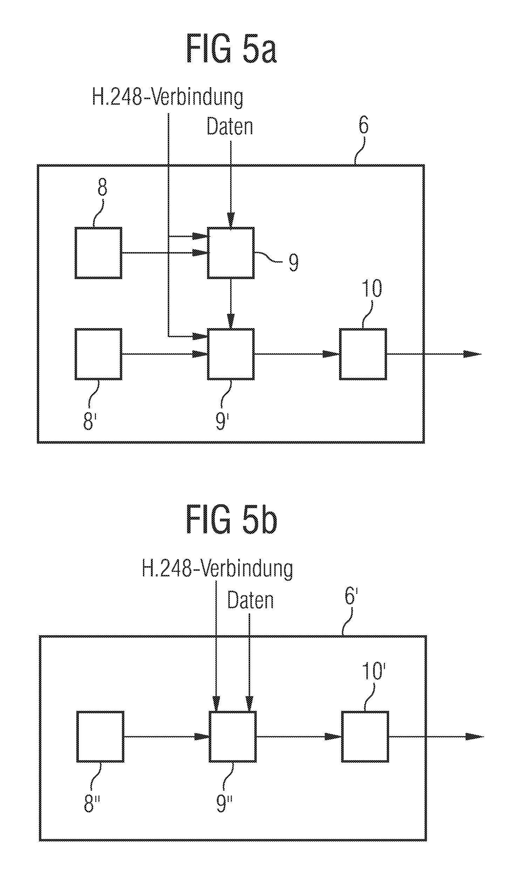

Figur 5a zeigt das Beispiel einer Konvertierungseinrichtung 6 gemäß einer Ausführungsform der Erfindung. Innerhalb der Konvertierungseinrichtung 6 sind zwei Datenbanken 8, 8' angeordnet. Die erste Datenbank 8 hält eine Vielzahl von Algorithmen zur Dekodierung von Daten gespeichert, die zweite Datenbank 8' hält eine Vielzahl von Algorithmen zur Kodierung von Daten gespeichert. Die zu konvertierenden Daten werden einem ersten Prozessor 9 zugeführt. Zwischen dem Prozessor 9 und der Steuerungseinrichtung 4 ist eine H.248-Verbindung aufgebaut, über der die zweite Kennzeichnung bezüglich des Codecs der zugeführten Daten transportiert wird. Entsprechend dieser Kennzeichnung wird aus der ersten Datenbank 8 ein Algorithmus zur Dekodierung dieser Daten geladen und anschließend eine Dekodierung durchgeführt.

Die dekodierten Daten werden daraufhin einem zweiten Prozessor 9' zugeführt, der ebenfalls eine H.248-Verbindung zu der Steuerungseinrichtung 4 hat, über den die dritte Kennzeichnung bezüglich des Codecs des gerufenen Endgerätes 5 transportiert wird. Entsprechend dieser Kennzeichnung wird der zur Kodierung notwenige Codec aus der zweiten Datenbank 8' geladen und eine Kodierung durchgeführt. Die kodierten Daten werden einer Sendeeinrichtung 10 zugeführt, die diese Daten dann an das jeweilige Endgerät überträgt.

Fig. 5b zeigt in einer beispielhaften Ausführung der Erfindung einen weiteren Aufbau einer Konvertierungseinrichtung 6'. Im Gegensatz zu der in Fig. 5a gezeigten Ausführung sind innerhalb der Einrichtung nur ein Prozessor 9'' und eine Datenbank 8" zur Durchführung des Verfahrens angeordnet. Die Datenbank 8" enthält Algorithmen zur Dekodierung und zugleich Kodierung von Daten. Entsprechend den über die H.248-Leitung übertragenen Kennzeichnungen wird aus der Datenbank 8" ein geeigneter Codec geladen, mittels dessen im Prozessor 9'' die dem Prozessor zugeführten Daten entsprechend der zweiten Kennzeichnung dekodiert und zugleich entsprechend der dritten Kennzeichnung kodiert werden. Die kodierten Daten werden einer Sendeeinrichtung 10' zugeführt, die diese Daten dann an das jeweilige Endgerät überträgt.

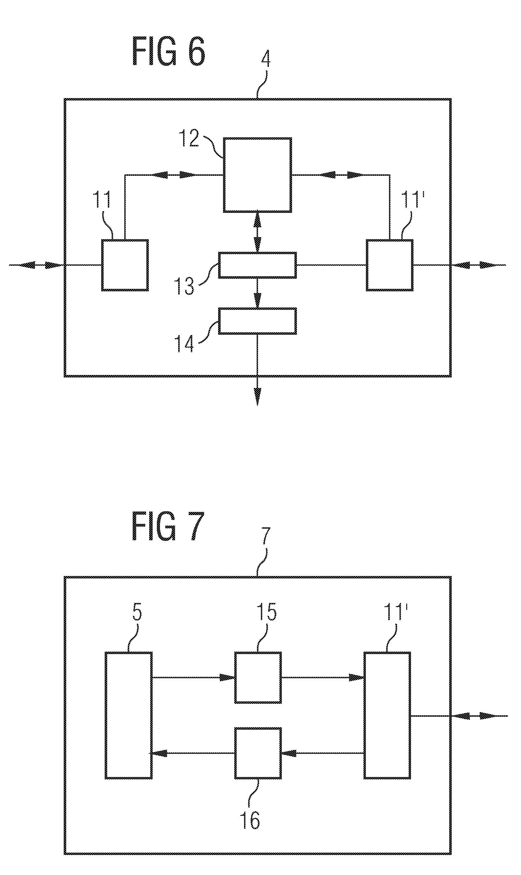

Fig. 6 zeigt in einer beispielhaften Ausführung der Erfindung einen Aufbau einer Steuerungseinrichtung 4. Der Einrichtung werden über eine erste und eine zweite H.225-Sende- und Empfangseinrichtung 11, 11' Signalisierungsdaten zum Aufbau einer Verbindung zwischen zwei Endgeräten zugeführt. Die Daten werden einer innerhalb der Einrichtung 4 angeordneten Überwachungseinrichtung 12 zugeführt, die einen aufgrund inkompatibler Kodierungs- und Dekodierungsverfahren abgewiesenen Verbindungsaufbau registriert und darauf eine erste Kennzeichnung an eine Signalisierungseinrichtung 13 überträgt.

Die Signalisierungseinrichtung sendet über die zweite H.225-Sende-und Empfangseinrichtung 11' eine Signalisierung zur Abfrage der innerhalb des zweiten Endgerätes eingerichteten Dekodierungsverfahren. In Abhängigkeit einer auf die Signalisierung erhaltenen Rück-Signalisierung des zweiten Endgerätes wird eine zweite Kennzeichnung in Abhängigkeit der innerhalb des zweiten Endgerätes eingerichteten Dekodierungsverfahren gekennzeichnet. In Abhängigkeit einer auf den Signalisierungsaufbaus erhaltenen Signalisierung des ersten Endgerätes wird eine dritte Kennzeichnung in Abhängigkeit des innerhalb des ersten Endgerätes eingerichteten Kodierungsverfahren gekennzeichnet. Die zweite und dritte Kennzeichnungen werden über eine H.248-Sende-und Empfangseinrichtung 15 an die Konvertierungseinrichtung übertragen.

Figur 7 stellt eine Kommunikationseinrichtung 7, bestehend aus einem Endgerät 5, das über Leitungen mit einer Kodierungseinrichtung 16 und einer Dekodierungseinrichtung 17 verbunden ist, dar. Die Einrichtungen sind jeweils mit einer H.225-Sende- und Empfangseinrichtung 11" verbunden, die die eingehenden Daten an die Dekodierungseinrichtung 17 weiterleitet. In einer in der Darstellung nicht gezeigten Ausführung, sind die Dekodierungseinrichtung 17, die Kodierungseinrichtung 16 und die H.225-Sende- und Empfangseinrichtung 11" innerhalb des Endgerätes 5 integriert. Anstelle eines Endgerätes kann ebenfalls ein VoIP-konfigurierter PersonalComputer verwendet werden.

Die Ausführung der Erfindung ist nicht auf die beschriebenen Beispiele und oben hervorgehobenen Aspekte beschränkt, sondern im Rahmen der Ansprüche ebenso in einer Vielzahl von Abwandlungen möglich, die im Rahmen fachgemäßen Handelns liegen.

## Patentansprüche

1. Verfahren zur Übertragung von Multimediadaten zwischen mindestens zwei Kommunikationseinrichtungen (7, 7'), die über ein Datennetz miteinander verbunden sind, wobei die Kommunikationseinrichtungen jeweils mit einer Kodierungseinrichtung (15) und einer Dekodierungseinrichtung (16) verbunden sind und die gesendeten Multimediadaten mittels eines jeweils innerhalb der Kodierungseinrichtungen (15) eingerichteten Kodierungsverfahrens quellen- und kanalkodiert werden und die empfangenen Multimediadaten jeweils mittels eines innerhalb der Dekodierungseinrichtungen (16) eingerichteten Dekodierungsverfahrens invers quellen- und kanalkodiert werden und die kodierten Multimediadaten über eine zwischen dem Datennetz und den Kodierungs- und Dekodierungseinrichtungen angeordnete Sende- und Empfangseinrichtung (11, 11', 11") übertragen und empfangen werden,
**dadurch gekennzeichnet, daß**
die Multimediadaten bei einem, aufgrund inkompatibler Kodierungs- und Dekodierungsverfahren nicht ausführbaren Verbindungsaufbaus, von der Sende- und Empfangseinrichtung der ersten Kommunikationseinrichtung (7) an eine im Datennetz vorgesehene Konvertierungseinrichtung (6, 6') übertragen werden, die Multimediadaten innerhalb der Konvertierungseinrichtung konvertiert werden, und
die konvertierten Multimediadaten an die Sende- und Empfangseinrichtung (11, 11', 11") der zweiten Kommunikationseinrichtung (7') übertragen werden.

2. Verfahren nach Anspruch 1,
**dadurch gekennzeichnet, daß**
mittels einer innerhalb einer Steuereinrichtung (4) angeordneten Überwachungseinrichtung (12) ein aufgrund inkompatibler Kodierungs- und Dekodierungsverfahren nicht ausführbarer Verbindungsaufbau gekennzeichnet wird und eine erste Kennzeichnung an eine innerhalb der Steuereinrichtung (4) angeordnete Signalisierungseinrichtung (13) übermittelt wird;
mittels der Signalisierungseinrichtung eine Signalisierung zur Abfrage der innerhalb der Dekodierungseinrichtung (16) der zweiten Kommunikationseinrichtung (7') eingerichteten Dekodierungsverfahren übermittelt wird;
durch die zweite Kommunikationseinrichtung (7') eine zweite Kennzeichnung in Abhängigkeit von den innerhalb der Dekodierungseinrichtung (16) eingerichteten Dekodierungsverfahren an die Steuereinrichtung (4) übertragen und durch die Steuereinrichtung an die Konvertierungseinrichtung (6, 6') übermittelt wird;
innerhalb der Steuereinrichtung (4) das Kodierungsverfahren der ersten Kommunikationseinrichtung (7) mit einer dritten Kennzeichnung gekennzeichnet und die dritte Kennzeichnung an die Konvertierungseinrichtung (6, 6') übermittelt wird, und die Multimediadaten innerhalb der Konvertierungseinrichtung (6, 6') in Abhängigkeit der zweiten und dritten Kennzeichnung konvertiert werden.

3. Verfahren nach Anspruch 1,
**dadurch gekennzeichnet, daß**
mittels einer innerhalb der Konvertierungseinrichtung (6'') angeordneten Überwachungseinrichtung (12) ein aufgrund inkompatibler Kodierungs- und Dekodierungsverfahren nicht ausführbarer Verbindungsaufbau gekennzeichnet wird und eine erste Kennzeichnung an eine innerhalb der Konvertierungseinrichtung (6, 6') angeordneten Signalisierungseinrichtung (13) übermittelt wird;
mittels der Signalisierungseinrichtung (13) eine Signalisierung zur Abfrage der innerhalb der Dekodierungseinrichtung (16) der zweiten Kommunikationseinrichtung (7') eingerichteten Dekodierungsverfahren übermittelt wird;
durch die zweite Kommunikationseinrichtung (7') eine zweite Kennzeichnung in Abhängigkeit von den innerhalb der Dekodierungseinrichtung eingerichteten Dekodierungsverfahren an die Konvertierungseinrichtung (6, 6') übermittelt wird;
innerhalb der Konvertierungseinrichtung (7, 7') das Kodierungsverfahren der ersten Kommunikationseinrichtung (7) mit einer dritten Kennzeichnung gekennzeichnet wird und
die Multimediadaten innerhalb der Konvertierungseinrichtung (6, 6') in Abhängigkeit der zweiten und dritten Kennzeichnung konvertiert werden.

4. Verfahren nach einem der Ansprüche 1 bis 3,
**dadurch gekennzeichnet, daß**
die zu konvertierenden Multimediadaten einer innerhalb der Konvertierungseinrichtung (6, 6') angeordneten Dekodierungseinrichtung (16') zugeführt werden, die entsprechend der zweiten Kennzeichnung eine Dekodierung der kodierten Multimediadaten durchführt;
die dekodierten Daten einer innerhalb der Konvertierungseinrichtung angeordneten Kodierungseinrichtung (15') zugeführt werden, die entsprechend der dritten Kennzeichnung eine Kodierung der Multimediadaten durchführt und
die kodierten Multimediadaten an die Sende- und Empfangseinrichtung (11") der zweiten Kommunikationseinrichtung (7') übertragen werden.

5. Verfahren nach Anspruch 4,
**dadurch gekennzeichnet, daß**
die Konvertierung innerhalb der Kodierungs- und Dekodierungseinrichtungen (15', 16') mittels eines auf einem Prozessor (9, 9', 9''), insbesondere einem Digital-Signal-Processor, ausgeführten Algorithmus durchgeführt wird.

6. Verfahren nach einem der Ansprüche 2 bis 5,
**dadurch gekennzeichnet, daß**
das Datennetz als Kommunikationssystem nach dem Standard H.323 zur Übertragung von VoIP-Daten aufgebaut und die Steuereinrichtung (4) als H.323 Gatekeeper ausgebildet ist.

7. Verfahren nach einem der Ansprüche 2 bis 5,
**dadurch gekennzeichnet, daß**
das Datennetz als Multimedia-Kommunikationssystem nach dem SIP-Standard aufgebaut und die Steuereinrichtung (4) als SIP-Proxy ausgebildet ist.

8. Verfahren nach einem der Ansprüche 2 bis 7,
**dadurch gekennzeichnet, daß**
die Konvertierungseinrichtung (6, 6') durch die Steuereinrichtung (4) mittels des H.248/MEGACO-Protokolls oder des MGCP-Protokolls angesteuert wird.

9. Steuereinrichtung zur Durchführung des Verfahrens nach einem der vorangehenden Ansprüche,
**gekennzeichnet durch**
eine Überwachungseinrichtung (12) zur Kennzeichnung eines aufgrund inkompatibler Kodierungs- und Dekodierungsverfahren abgewiesenen Verbindungsaufbaus mit einer ersten Kennzeichnung,
eine Signalisierungseinrichtung (13) zur Signalisierung einer Abfrage der innerhalb der Dekodierungseinrichtung (16) der zweiten Kommunikationseinrichtung (7') eingerichteten Dekodierungsverfahren,
und eine Sende- und Empfangseinrichtung (14) zur Übertragung einer Kennzeichnung in Abhängigkeit des Kodierungsverfahrens der Kodierungseinrichtung (15) der ersten Kommunikationseinrichtung (7) und der Dekodierungsverfahren der Dekodierungseinrichtung (16) der zweiten Kommunikationseinrichtung (7').

10. Konvertierungseinrichtung zur Durchführung des Verfahrens nach einem der vorangehenden Ansprüche, **gekennzeichnet durch**
eine Datenbank (8, 8', 8") zum Speichern einer Mehrzahl von Algorithmen zur Dekodierung/Kodierung von Multimediadaten; eine Empfangseinrichtung zum Empfang kodierter Multimediadaten von den Sende- und Empfangseinrichtungen (11'') der Kommunikationseinrichtungen (7, 7');
einen Prozessor (9, 9', 9'') zur Durchführung eines Kodierungs- und Dekodierungsverfahrens bezüglich der empfangenen Multimediadaten, und
eine Sendeeinrichtung (10, 10') zur Übertragung der kodierten Multimediadaten an die Sende- und Empfangseinrichtungen (11") der Kommunikationseinrichtungen (7, 7').
